# EUROPÄISCHE PATENTANMELDUNG

(11) **EP 1 477 096 A1**
(43) Veröffentlichungstag der Anmeldung: **17.11.2004**
(21) Anmeldenummer: 04005532.9
(22) Anmeldetag: 09.03.2004
(51) Int. Cl.: A47J 45/07

(54) **Gefäss mit einem an der Aussenseite des Gefässes befestigbaren Griffkörper**

(30) Priorität: 16.05.2003 DE 10322409
(71) Anmelder: HEINRICH BAUMGARTEN KG SPEZIALFABRIK FÜR BESCHLAGTEILE, 57290 Neunkirchen (DE)
(72) Erfinder: Fischbach, Wolfgang,Dipl.-Ing., 57567 Daaden (DE)
(74) Vertreter: von den Steinen, Axel

(57) **Zusammenfassung**

Die Erfindung betrifft ein Gefäß (01) mit einem am Gefäß (01) befestigbaren Griffkörper (04), wobei an der Außenseite des Gefäßes (01) ein Halteelement (03) angeordnet ist, und wobei im Griffkörper (04) eine Ausnehmung (05) vorgesehen ist, in die das Halteelement (03) formschlüssig eingesteckt werden kann, und wobei zwischen Griffkörper (04) und Halteelement (03) ein Befestigungselement (07) zum Eingriff kommt, mit dem der Griffkörper (04) am Halteelement (03) festgelegt wird. Das Befestigungselement ist dabei in der Art eines Vielkantelements (07) ausgebildet, das mit mehreren Befestigungskanten am Griffkörper (04) und/oder am Halteelement (03) form- und/oder reibschlüssig zum Eingriff bringbar ist.

## Beschreibung

Die Erfindung betrifft ein Gefäß mit einem an der Außenseite des Gefäßes befestigbaren Griffkörper nach dem Oberbegriff des Anspruchs 1.

Gattungsgemäße Gefäße finden beispielsweise in der Art von Kochgeschirr (z.B. Töpfe, Pfannen) Verwendung. Da sich solches Kochgeschirr während des Gebrauchs erhitzt, sind üblicherweise temperaturisolierende Griffkörper an der Außenseite des Gefäßes befestigt, mit denen das Gefäß oder Teile des Gefäßes, beispielsweise ein Topfdeckel, gehandhabt werden kann.

Zur Befestigung des Griffkörpers am Gefäß kommen vielfach sogenannte Steckverbindungen zum Einsatz. Dazu sind am Gefäß ein oder mehrere Halteelemente, beispielsweise Haltebolzen, befestigt, auf die der Griffkörper mit einer entsprechend geformten Ausnehmung formschlüssig aufgesteckt werden kann. Zur Befestigung des Griffkörpers auf dem Halteelement werden zwischen Griffkörper und Halteelement Befestigungselemente zum Eingriff gebracht.

Aus der DE 38 05 229 A1 ist ein solches Gefäß mit daran befestigtem Griffkörper bekannt. Als Befestigungselement zur Befestigung des Griffkörpers auf dem Halteelement wird dabei eine Befestigungsfederverwendet, die beim Aufstecken des Griffkörpers in eine Hinterschneidung der Ausnehmung eingreift. Nachteilig an dieser Konstruktionslösung ist es, dass die vom Federelement maximal aufbringbare Haltekraft nicht sehr hoch ist. Außerdem erfordert die Anordnung des Federelements zwischen Griffkörper und Halteelement die Einhaltung sehr genauer Fertigungstoleranzen und die Einarbeitung einer Hinterschneidung in der Ausnehmung.

Ausgehend von diesem Stand der Technik ist es deshalb Aufgabe der vorliegenden Erfindung, ein neues Gefäß vorzuschlagen, das die Nachteile der Gefäße aus dem Stand der Technik vermeidet.

Diese Aufgabe wird durch ein Gefäß nach der Lehre des Anspruchs 1 gelöst.

Vorteilhafte Ausführungsformen der Erfindung sind Gegenstand der Unteransprüche.

Die Erfindung beruht auf dem Grundgedanken, zwischen Griffkörper und Halteelement ein Vielkantelement anzuordnen, das mit mehreren Befestigungskanten am Griffkörper und/oder am Halteelement form- und/oder kraft- und/oder reibschlüssig zum Eingriff kommt. Aufgrund der Vielzahl von Befestigungskanten ergibt sich die maximal vom Vielkantelement übertragbare Haltekraft aus der Addition der Haltekräfte, die von jeder einzelnen Befestigungskante aufgebracht wird. Im Ergebnis erlaubt also die erfindungsgemäße Lösung, durch Erhöhung der Anzahl der Befestigungskanten die maximal übertragbare Haltekraft in einfacher Weise zu steigern.

Nach einer bevorzugten Ausführungsform der Erfindung ist die lichte Weite zwischen der Wandung des Griffkörpers und der Wandung des Halteelements im Bereich des Vielkantelements zumindest geringfügig kleiner als die entsprechende Breite des Vielkantelements. Im Ergebnis wird dadurch erreicht, dass das Vielkantelement durch das Aufstecken des Griffkörpers zumindest geringfügig zwischen Griffkörper und Halteelement verformt wird. Die dabei aufgebrachte Spannkraft wirkt zwischen den Befestigungskanten des Vielkantelements und der anliegenden Oberfläche des Griffkörpers bzw. Halteelements, was im Ergebnis zu einer erheblichen Steigerung der von jeder einzelnen Befestigungskante übertragbaren Haltekraft führt.

Um die Montage des Vielkantelements beim Aufstecken des Griffkörpers auf das Halteelement zu vereinfachen, kann am Griffkörper und/oder am Halteelement eine Vertiefung vorgesehen sein, in die das Vielkantelement vor dem Einstecken eingelegt wird. Die Vertiefung führt das Vielkantelement beim Aufstecken des Griffkörpers und sorgt für eine definierte Anordnung des Vielkantelements zwischen Griffkörper und Halteelement.

Vorzugsweise sollte die Vertiefung auf einer Seite eine Anschlagfläche aufweisen, an dem das Vielkantelement beim Aufstecken des Griffkörpers zur Anlage kommt. Über diesen Anschlag kann die zum Aufstecken des Vielkantelements erforderliche Kraft übertragen werden.

Besonders hohe Halte- bzw. Abziehkräfte ergeben sich, wenn die Befestigungskanten des Vielkantelements bei Anordnung des Vielkantelements zwischen Griffkörper und Halteelement eine Widerhakenstruktur bilden. Dies bedeutet mit anderen Worten, dass die Befestigungskanten in eine Richtung weisen, die der Abziehrichtung zumindest teilweise entgegengesetzt sind. Im Ergebnis wird dadurch erreicht, dass die Befestigungskanten bei Aufbringung einer Abziehkraft immer tiefer in die Oberfläche des Griffkörpers bzw. Halteelements eingegraben werden, wodurch die Haltekraft gesteigert wird. Die Widerhakenstruktur bewirkt also eine Sperrwirkung beim Abziehen des Griffes, so dass ein ungewolltes Lösen des Griffes vom Gefäß zuverlässig ausgeschlossen ist.

Welche Gestalt das Vielkantelement aufweist, ist grundsätzlich beliebig, solange eine ausreichende Anzahl von Befestigungskanten vorgesehen ist. Eine besonders einfache und preisgünstige Variante ist es, wenn als Vielkantelement eine Schraubenfeder eingesetzt wird. Der Außenumfang der Windungen der Schraubenfeder wirkt dabei im Kontaktbereich mit dem Halteelement bzw. mit dem Griffstück als Befestigungskanten. Die Gestaltung der Befestigungskanten hängt dabei vom Querschnitt der Schraubenfeder ab, der beispielsweise rund oder prismatisch sein kann. Bei einem runden Querschnitt weisen die Befestigungskanten eine kreisbogenabschnittsförmige Gestalt auf.

Auch die Gestaltung des Halteelements ist grundsätzlich beliebig. Nach einer ersten bevorzugten Ausführungsvariante ist das Halteelement in der Art eines Haltebolzens, beispielsweise aus Edelstahl oder Aluminium gefertigt. Alternativ dazu kann das Halteelement auch in der Art eines Blechbiegeteils ausgebildet sein.

Besonders vorteilhaft ist es, wenn das Halteelement einen offenen oder geschlossenen prismatischen, insbesondere viereckigen, Querschnitt aufweist. Das Vielkantelement wird dann an einer Ecke oder Kante des Halteelements zum Eingriff gebracht. Auf diese Weise wird erreicht, dass das Halteelement vom Vielkantelement gegen eine Seite der Ausnehmung gedrückt wird, wodurch sich ein spielfreier Sitz des Halteelements in der Ausnehmung des Griffstücks ergibt. Im Ergebnis können dadurch die Fertigungstoleranzen bei Fertigung der Ausnehmung im Griffstück bzw. bei Fertigung des Halteelements vergrößert werden, ohne dass dadurch der spielfreie Sitz des Griffstücks gefährdet wird.

Verschiedene Ausführungsformen der Erfindung sind in den Zeichnungen schematisch dargestellt und werden nachfolgend beispielhaft erläutert.

Es zeigen:
- **Fig. 1:**: eine erste Ausführungsform eines erfindungsgemäßen Gefäßes mit Griffstück im Längsschnitt entlang der Schnittlinie B-B;
- **Fig. 2:**: das Gefäß gemäß Fig. 1 im Querschnitt entlang der Schnittlinie A-A;
- **Fig. 3:**: das Gefäß gemäß Fig. 1 in einem vergrößert dargestellten Längsschnitt;
- **Fig. 4:**: das Griffstück mit Vielkantelement des Gefäßes gemäß **Fig. 1** im unmontierten Zustand;
- **Fig. 5:**: eine zweite Ausführungsform eines Halteelements in seitlicher Ansicht;
- **Fig. 6:**: das Halteelement gemäß **Fig. 5** in Ansicht von vorn;
- **Fig. 6a:**: das Halteelement gemäß **Fig. 5** in einer alternativen Ausführungsform in Ansicht von vorn;
- **Fig. 6b:**: das Halteelement gemäß **Fig. 5** in einer alternativen Ausführungsform in Ansicht von vorn;
- **Fig. 7:**: eine dritte Ausführungsform eines Halteelements in seitlicher Ansicht;
- **Fig. 8**:: das Halteelement gemäß **Fig. 7** in Ansicht von vorn.

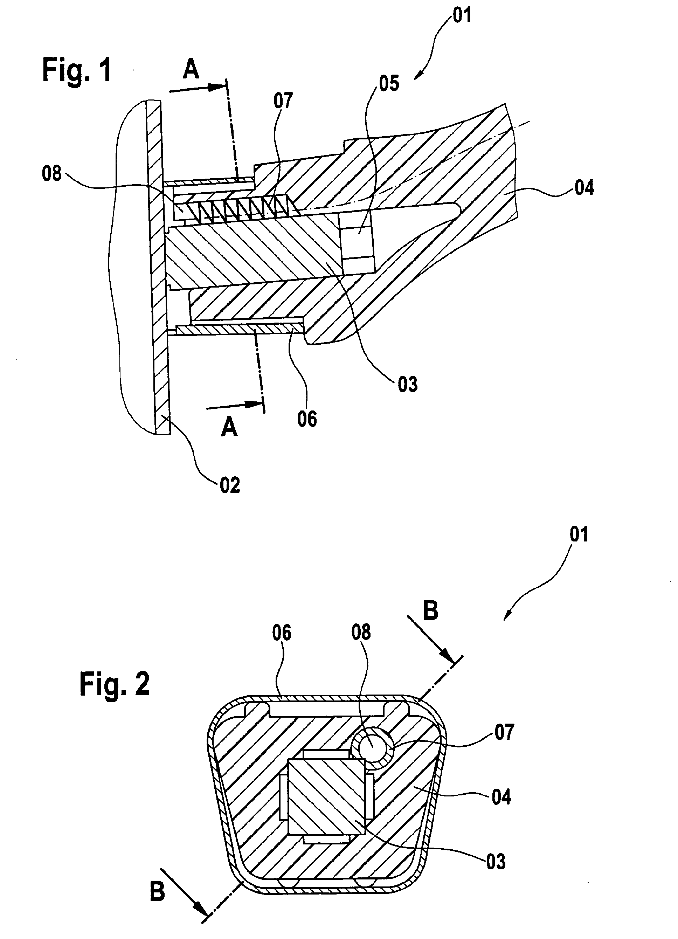

In **Fig. 1** ist ein Ausschnitt einer Ausführungsform eines erfindungsgemäßen Gefäßes 01 im Längsschnitt dargestellt. An der Außenseite der Wandung 02 des Gefäßes 01 ist ein Halteelement 03, das in der Art eines prismatischen Haltebolzens aus Aluminium ausgebildet ist, befestigt. Die Befestigung des Halteelements 03 an der Gefäßwandung 02 kann beispielsweise durch Schweißen, Nieten oder Löten erfolgen.

Auf das Halteelement 03 kann ein Griffkörper 04, der in der dargestellten Ausführungsform in der Art eines Stils ausgebildet ist, aufgesteckt werden. Dazu ist an einem Ende des Griffkörpers 04 eine prismatische Ausnehmung 05 vorgesehen, deren Gestaltung das spielfreie Aufstecken des Griffkörpers 04 auf das Halteelement 03 erlaubt. Die Flanken der Ausnehmungen weisen im Bereich des Halteelements freigeschnittene Rücksprünge auf, so dass der Formschluss zwischen Halteelement und Griffstück nur im Bereich der Ecken der Ausnehmung realisiert wird.

Der Übergangsbereich zwischen Griffkörper 04 und Gefäßwandung 02 wird mittels einer beispielsweise aus Blech gefertigten Manschette 06 nach außen hin abgedeckt.

Zur Befestigung des Griffkörpers 04 am Halteelement 03 ist ein Vielkantelement 07 vorgesehen, das in der dargestellten Ausführungsform in der Art einer Schraubenfeder aus Stahldraht ausgebildet ist. Zur Führung des Vielkantelements 07 ist im Griffkörper 04 eine kreisförmige Vertiefung 08 vorgesehen, deren Durchmesser geringfügig größer ist als der Durchmesser der als Vielkantelement 07 verwendeten Schraubenfeder. Die Vertiefung 08 ist dabei derart angeordnet, dass eine Ecke der quadratischen Ausnehmung 05 von der kreisringförmigen Vertiefung 08 geschnitten wird. Im Ergebnis wird dadurch erreicht, dass die in der Vertiefung 08 angeordnete Schraubenfeder 07 beim Aufstecken des Griffkörpers 04 an einer Ecke des Halteelements 03 form- und/oder kraft- und/oder reibschlüssig zum Eingriff kommt.

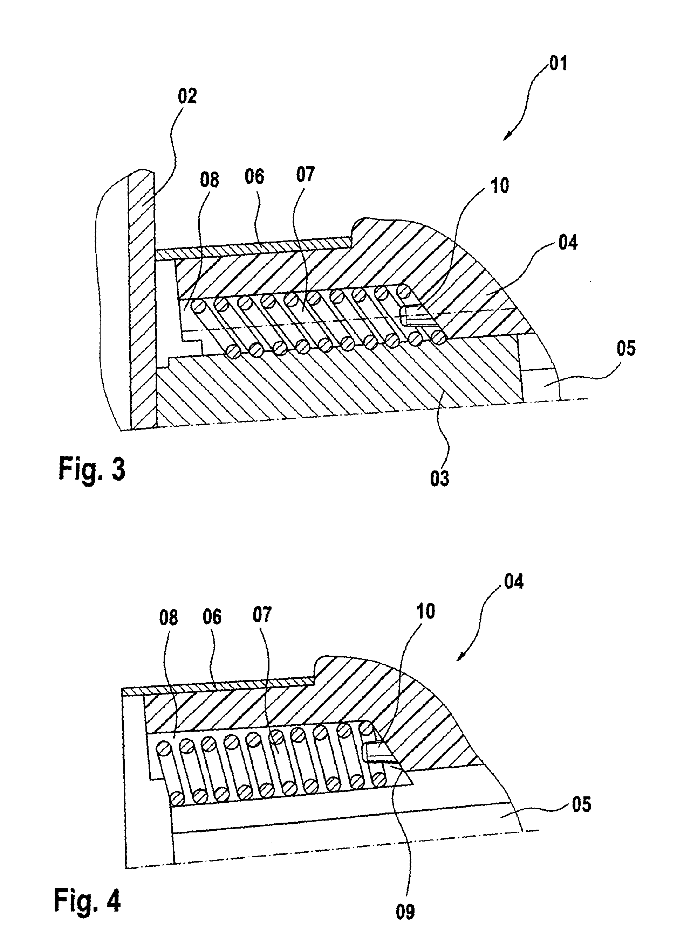

Die Größenverhältnisse der Ausnehmung 05, der Vertiefung 08 und des Vielkantelements 07 sind in Fig. 4 erkennbar, die den Griffkörper 04 im unmontierten Zustand darstellen. Die als Vielkantelement 07 verwendete Schraubenfeder steht ein Stück weit in die Ausnehmung 05 hinein. An der von der Gefäßwandung 02 wegweisenden Seite der Vertiefung 08 ist eine Anschlagfläche 09 vorgesehen, an der der Endquerschnitt der Schraubenfeder 07 zur Anlage kommen kann. Wie in Fig. 4 zu erkennen ist, ist die Anschlagfläche 09 gegenüber dem Endquerschnitt der Schraubenfeder 07 geneigt, so dass durch die Anlage des Endquerschnitts an der Anschlagfläche 09 die Windungen der Schraubenfeder 07 unter Verformungen der Schraubenfeder 07 winkelig umgelegt werden. Zur Führung der Schraubenfeder 07 ist in der Anschlagfläche 09 ein Zentrierdorn 10 vorgesehen. Durch die gerichtete Verformung der Windungen der Schraubenfeder 07 wird im Ergebnis eine Widerhakenstruktur gebildet, so dass die von den Windungen der Schraubenfeder 07 gebildeten Befestigungskanten bei Gebrauch des Gefäßes aufgebrachten Abziehkraft effektiv entgegen wirken.

Der verformte Zustand der Schraubenfeder 07 nach Aufstecken des Griffkörpers 04 auf das Halteelement 03 ist in **Fig. 3** dargestellt. Aufgrund der Fertigung des Griffstücks 04 aus Kunststoff und des Halteelements 03 aus Aluminium wird es möglich, dass sich die Windungen der Schraubenfeder 07 ein Stück weit in die Oberfläche des Halteelements 03 und des Griffkörpers 04 eingraben. Im Ergebnis entsteht dadurch eine form- und/oder kraft- und/oder reibschlüssig Verbindung zwischen Schraubenfeder 07 einerseits und Griffkörper 04 bzw. Halteelement 03 andererseits. Aufgrund der Vielzahl von Windungen an der Schraubenfeder 07 und der entsprechend hohen Anzahl von Befestigungskanten lassen sich dadurch sehr hohe Abziehkräfte realisieren.

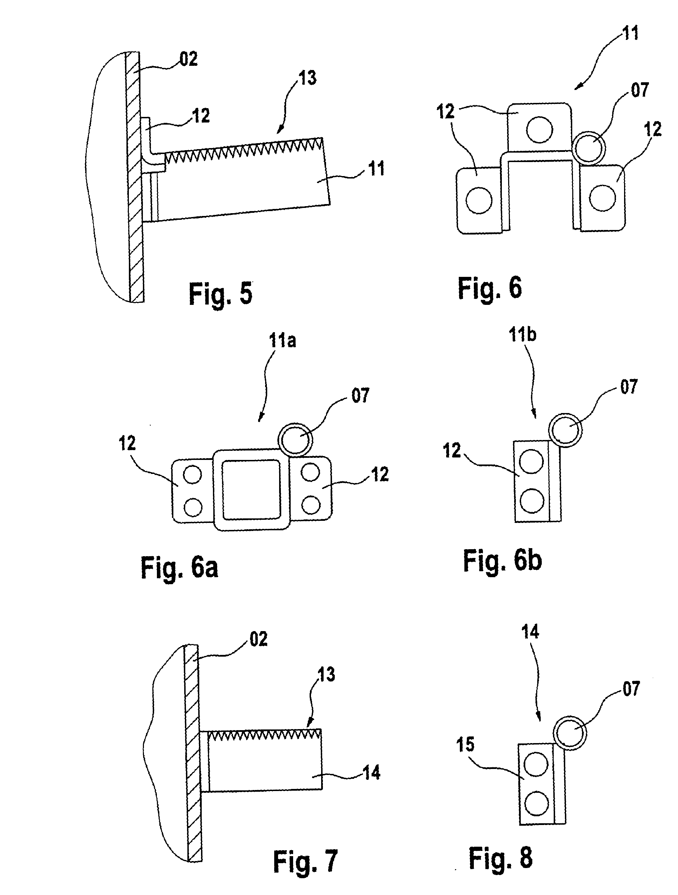

In **Fig. 5** und **Fig. 6** sind weitere zweite Ausführungsformen von Halteelementen dargestellt, die für erfindungsgemäße Gefäße Verwendung finden können. Das in **Fig. 5** in seitlicher Ansicht dargestellte Halteelement 11 ist in der Art eines Blechbiegeteils ausgebildet und kann beispielsweise aus Stahlblech hergestellt sein. Mittels Befestigungslaschen 12 kann das Halteelement 11 an der Außenseite der Gefäßwandung 02 befestigt werden. Aufgrund der relativ hohen Härte von Stahlblech ist ein Eingraben der Befestigungskanten eines Vielkantelements am Halteelement 11 nicht ohne weiteres möglich. Aus diesem Grund weist das Halteelement 11 eine Riffelung 13 auf, in der beispielsweise die Windungen einer Schraubenfeder 07 verkantet werden können. Die relative Einbaulage zwischen Schraubenfeder 07 und der in der Art eines offenen prismatischen Querschnitts ausgebildeten Halteelement 11 ist in **Fig. 6** schematisch dargestellt.

**Fig. 6a** und **Fig. 6b** zeigen das Halteelement gemäß **Fig. 5** in einer alternativen Ausführungsform in Ansicht von vorn.

In **Fig. 7** und **Fig. 8** ist eine weitere Ausführungsform 14 eines Halteelements zur Verwendung an erfindungsgemäßen Gefäßen dargestellt. Auch das Halteelement 14 ist in der Art eines Blechbiegeteils aus Stahlblech hergestellt und weist eine Riffelung 13 zum Eingriff beispielsweise einer Schraubenfeder 07 auf. Zur Befestigung an der Gefäßwandung 02 ist auf einer Seite des Halteelements 13 eine abgewinkelte Lasche 15 vorgesehen.

## Patentansprüche

1. Gefäß (01) mit einem am Gefäß (01) befestigbaren Griffkörper (04), wobei an der Außenseite des Gefäßes (01) ein Halteelement (03) angeordnet ist, und wobei im Griffkörper (04) eine Ausnehmung (05) vorgesehen ist, in die das Halteelement (03) formschlüssig eingesteckt werden kann, und wobei zwischen Griffkörper (04) und Halteelement (03) ein Befestigungselement (07) zum Eingriff kommt, mit dem der Griffkörper (04) am Halteelement (03) festgelegt wird,
**dadurch gekennzeichnet,**
**dass** das Befestigungselement in der Art eines Vielkantelements (07) ausgebildet ist, das mit mehreren Befestigungskanten am Griffkörper (04) und/oder am Halteelement (03) form- und/oder kraft- und/oder reibschlüssig zum Eingriff bringbar ist.

2. Gefäß nach Anspruch 1,
**dadurch gekennzeichnet,**
**dass** die lichte Weite zwischen der Wandung des Griffkörpers (04) und der Wandung des Halteelements (03) im Bereich des Vielkantelements (07) zumindest geringfügig kleiner als die entsprechende Breite des Vielkantelements (07) ist, so dass das Vielkantelement (07) bei Anordnung zwischen Griffkörper (04) und Halteelement (03) zumindest geringfügig verformt wird.

3. Gefäß nach Anspruch 1 oder 2,
**dadurch gekennzeichnet,**
**dass** das Vielkantelement (07) in einer Vertiefung (08) am Griffkörper (04) und/oder am Halteelement angeordnet ist, die das Vielkantelement (07) seitlich führt.

4. Gefäß nach Anspruch 3,
**dadurch gekennzeichnet,**
**dass** die Vertiefung (08) auf der vom Halteelement (03) wegweisenden Seite eine Anschlagfläche (09) aufweist, an dem das Vielkantelement (07) beim Aufstecken des Griffkörpers (04) zur Anlage kommen kann.

5. Gefäß nach Anspruch 4,
**dadurch gekennzeichnet,**
**dass** die Anschlagfläche (09) gegenüber dem an der Anschlagfläche (09) zur Anlage bringbaren Endquerschnitt des Vielkantelements (07) geneigt ist.

6. Gefäß nach Anspruch 4 oder 5,
**dadurch gekennzeichnet,**
**dass** auf der Anschlagfläche (09) ein Zentrierdorn (10) zur Zentrierung des Vielkantelements (07) in der Vertiefung (08) vorgesehen ist.

7. Gefäß nach einem der Ansprüche 1 bis 6,
**dadurch gekennzeichnet,**
**dass** die Befestigungskanten bei Anordnung des Vielkantelements (07) zwischen Griffkörper (04) und Halteelement (03) eine Wiederhakenstruktur bilden.

8. Gefäß nach einem der Ansprüche 1 bis 7,
**dadurch gekennzeichnet,**
**dass** das Vielkantelement (07) in der Art einer Schraubfeder ausgebildet ist.

9. Gefäß nach Anspruch 8,
**dadurch gekennzeichnet,**
**dass** die Schraubfeder (07) aus Stahldraht hergestellt ist.

10. Gefäß nach Anspruch 8 oder 9,
**dadurch gekennzeichnet,**
**dass** der Stahldraht einen Durchmesser von circa 0,1mm bis 5mm aufweist.

11. Gefäß nach einem der Ansprüche 8 bis 10,
**dadurch gekennzeichnet,**
**dass** die Schraubfeder (07) einen Durchmesser von 1mm bis 20mm aufweist.

12. Gefäß nach einem der Ansprüche 1 bis 11,
**dadurch gekennzeichnet,**
**dass** der Griffkörper (04) aus Kunststoff, Glas, Keramik, Metall oder Holz hergestellt ist.

13. Gefäß nach einem der Ansprüche 1 bis 12,
**dadurch gekennzeichnet,**
**dass** das Halteelement (03) aus einem weichem Metall, insbesondere Aluminium, hergestellt ist, wobei durch die Befestigungskanten bei Anordnung des Vielkantelements (07) zwischen Griffkörper (04) und Halteelement (03) eine form- und/oder kraft- und/oder reibschlüssig wirkende Oberflächenstruktur im Halteelement (03) gebildet wird.

14. Gefäß nach einem der Ansprüche 1 bis 12,
**dadurch gekennzeichnet,**
**dass** das Halteelement (11, 14) aus einem harten Metall, insbesondere Stahl, hergestellt ist, wobei das Halteelement (11, 14) eine vorgefertigte Oberflächenstruktur, insbesondere eine Riffelung (13), zum formschlüssigen Eingriff der Befestigungskanten des Vielkantelements (07) aufweist.

15. Gefäß nach einem der Ansprüche 1 bis 14,
**dadurch gekennzeichnet,**
**dass** das Halteelement (03) in der Art eines Haltebolzens ausgebildet ist.

16. Gefäß nach einem der Ansprüche 1 bis 14,
**dadurch gekennzeichnet,**
**dass** das Halteelement (11, 14) in der Art eines Blechbiegeteils ausgebildet ist.

17. Gefäß nach einem der Ansprüche 1 bis 16,
**dadurch gekennzeichnet,**
**dass** das Halteelement (03, 11, 14) einen offen oder geschlossen prismatischen, insbesondere viereckigen, Querschnitt aufweist, wobei zumindest ein Vielkantelement (07) an einer Ecke oder Kante des Halteelements (03, 11, 14) zum Eingriff kommt.

18. Gefäß nach einem der Ansprüche 1 bis 17,
**dadurch gekennzeichnet,**
**dass** der Griffkörper (04) in der Art eine Seitengriffs mit mittiger Befestigung oder in der Art eine Seitengriffs mit zweiseitiger Befestigung oder in der Art eines Deckelknopfs oder in der Art Henkels oder in der Art eines Stiels ausgebildet ist.

19. Griffkörper (04) mit Halteelement (03) und Befestigungselement
**dadurch gekennzeichnet,**
**dass** Griffkörper (04), Halteelement (03) und Befestigungselement zur Bildung eines Gefäßes nach einem der Ansprüche 1 bis 18 geeignet sind.
